# EUROPEAN PATENT APPLICATION

(11) **EP 4 814 338 A1**
(43) Date of publication of application: **30.09.2026**
(21) Application number: 26165744.9
(22) Date of filing: 18.03.2026
(51) Int. Cl.: F16G 15/08, A63B 29/00, F16G 11/14

(54) **SWIVEL CONNECTING DEVICE FOR ROPE ACCESS WORK AT HEIGHT**

(30) Priority: 25.03.2025 IT 202500006144
(71) Applicant: Arbpro S.r.l., 20836 Briosco (MB) (IT)
(72) Inventor: MAZZA, Alessandro, 20836 Briosco (MB) (IT); GALLETTI, Davide Gianni Mario, 20836 Briosco (MB) (IT)
(74) Representative: Di Bernardo, Antonio

(57) **Abstract**

A swivel connecting device (10) comprising at least one connecting element (11), which in turn comprises a first eyelet-shaped portion (11a), and a pair of half-shells (12) between which the at least one connecting element (11) is housed with the first eyelet-shaped portion (11a) protruding externally from a volume delimited by the pair of half-shells (12) and in a rotatable manner around a development axis (A), wherein a second portion (11b) shaped like an elongated stem along the development axis (A) extends from the first eyelet-shaped portion (11a) of the at least one connecting element (11) between the half-shells (12), wherein the connecting element (11) comprises a third enlarged portion (11c) at a free termination of the second portion (11b), the third enlarged portion comprising at least one surface (11c') developing transversal to the development axis (A), wherein each half-shell of the pair of half-shells (12) comprises a respective through opening, wherein each opening defines a seat (14) in which it engages the at least one transversal surface (11c') of the enlarged portion (11c) of the connecting element (11).

## Description

### TECHNICAL FIELD

The present invention generally relates to a swivel connecting device for use in rope access work at height, such as arboriculture, mountaineering and mountain rescue.

### STATE OF THE ART

In the field of rope access work at height, and particularly in arboriculture, mountaineering and mountain rescue, it is common to carry out a range of operations, using various types of tools to attach a pair of ropes to each other or to attach a rope to fixed or movable anchor points, such as pitons or harness attachment rings. Typical tools for attachment between ropes or anchor points are carabiners, rope ends or portions, descenders, rope clamps, brakes, ascenders, connections between carabiners, pulleys, hoists and so on.

To facilitate the attachment of such tools to ropes or fixed or movable anchor points, it is known to use connecting devices which, in general terms, provide at least one eyelet to which the coupling tools can be anchored.

Connecting devices are crucial elements for the correct and safe execution of rope manoeuvres, as they are tasked with preventing the rope to which the coupling tool is connected from twisting. This is, in fact, very dangerous because it can compromise the use of the ropes and coupling tools, or even operate them in the wrong way, making rope manoeuvres difficult or impossible, as well as exposing operators to serious risks to their safety.

For this reason, it is known to use swivel connecting devices, which usually consist of a pair of elements, of which a first made in the form of an eyelet to facilitate the constraint of a coupling tool and a second configured to cooperate with a device, or a portion thereof, interacting with a rope, wherein the two elements are constrained together in such a way that they can rotate with respect to each other about a main axis. The second element can, for example, itself be an eyelet element, or a pulley, a peg around which to constrain a slotted end of a rope, a device or part thereof interacting with a rope, and so on.

Such devices allow the coupling tools to be connected in a rotatable manner, thus leaving ample freedom of movement between the coupled elements. For example, the swivel connection between a pair of ropes allows them to be free to rotate with respect to each other without tension or twisting.

By virtue of the functional and safety retention features that swivel connecting devices must ensure, those known today have a very complex structure. Consequently, their manufacture requires time-consuming and costly work.

There is therefore a need for a swivel connecting device which can be made through quick, simple and inexpensive operations, but at the same time is able to ensure the necessary functional and safety retention features.

### AIMS AND SUMMARY OF THE INVENTION

The problem underlying the present invention is to overcome the drawbacks of the prior art. In particular, within such a problem, an aim is to devise a swivel connecting device for rope access work at height which has a simple structure and can be made with simple and routine operations, such as moulding, laser cutting, turning and milling.

Another aim of the present invention is to provide a swivel connecting device for rope access work at height which is capable of providing a secure and reliable connection, allowing the connected elements to rotate towards each other without jamming or catching.

A further aim of the present invention is to devise a versatile and easily adaptable swivel connecting device for rope access work at height for use in combination with a plurality of different tools, such as rope ends, double or triple swivels, pulleys, rope clamps, descenders, ascenders and so on.

Not least of the aims of the present invention is to devise a swivel connecting device for rope access work at height which can be made inexpensively.

In accordance with a first aspect thereof, the invention thus relates to a swivel connecting device for rope access work at height comprising at least one connecting element, which in turn comprises a first eyelet-shaped portion, and a pair of half-shells between which the at least one connecting element is housed with the first eyelet-shaped portion protruding externally from a volume delimited by the pair of half-shells and in a rotatable manner around a development axis.

From the first eyelet-shaped portion of the at least one connecting element extends, between the half-shells, a second elongated stem-shaped portion along a development axis, wherein at a free termination of the second portion, the connecting element comprises a third elongated portion comprising at least one surface with development transverse to the development axis.

According to the present invention, each half-shell of the pair of half-shells comprises a respective through opening, wherein each opening defines a seat in which it engages the at least one transversal surface of the enlarged portion of the connecting element such that it is free to rotate around the development axis and such as to unload onto the pair of half-shells a component of force along the development axis applied to the connecting element.

The Applicant has identified that by virtue of the special shape of the connecting element and the presence of a through engagement seat in the two half-shells, a reliable coupling can be made which is capable of preserving the freedom of rotation of the connecting element and at the same time unloads onto the half-shells any component of force along the development axis which is applied to the connecting element, thereby achieving a safe tensile constraint.

Furthermore, the special half-shell design of the body in which the connecting element is housed makes it possible to manufacture and assemble the swivel connecting device in an extremely simple and economical manner. In fact, the half-shells can be moulded and/or obtained by cutting a sheet and can be joined together through constraint means applicable according to standard operations.

Not least, the simple and cost-effective structure makes it easy to implement adaptations and modifications, allowing the device according to the invention to be used in combination with various different tools, such as rope ends, double or triple swivels, pulleys, rope clamps, descenders, ascenders, position controllers and so on.

Further features of the preferred embodiments of the swivel connecting device for rope access work at height according to the present invention are the subject matter of the dependent claims.

### BRIEF DESCRIPTION OF THE DRAWINGS

Further features and advantages of the present invention will become clearer from the following detailed description of some preferred embodiments thereof, made with reference to the accompanying drawings.

The different features in the individual configurations can be combined with each other as desired according to the following description, if the advantages resulting specifically from a particular combination are to be availed of.

In such drawings,
- Figure 1 is a perspective view of a first preferred embodiment of a swivel connecting device for rope access work at height according to the present invention;
- Figures 1a and 1b show, respectively, a sectional view and an exploded view of the device of Figure 1;
- Figure 2 is a perspective view of a swivel connecting device for rope access work at height in accordance with a second preferred embodiment of the present invention;
- Figures 2a and 2b are, respectively, a sectional view and an exploded view of the device of Figure 2;
- Figure 3 is a perspective view of a third preferred embodiment of a swivel connecting device for rope access work at height according to the present invention, mounted in combination with a pulley;
- Figures 3a and 3b are, respectively, a sectional view and an exploded view of the device of Figure 3;
- Figure 4 is a perspective view of a fourth preferred embodiment of a swivel connecting device for rope access work at height according to the present invention mounted in combination with a coupling tool, in this case, an adjustment tool for positioning;
- Figures 4a and 4b are, respectively, a lateral elevation view and a sectional view of the swivel connecting device for rope access work at height and the adjustment tool for positioning of Figure 4; and
- Figure 5 is a plan view of a triple swivel using three swivel connecting devices for rope access work at height according to the fourth embodiment of the present invention.

### DETAILED DESCRIPTION OF THE INVENTION

For the illustration of the drawings, use is made in the following description of identical numerals or symbols to indicate construction elements with the same function. Moreover, for clarity of illustration, certain references may not be repeated in all drawings.

While the invention is susceptible to various modifications and alternative constructions, certain preferred embodiments are shown in the drawings and are described hereinbelow in detail. It must in any case be understood that there is no intention to limit the invention to the specific embodiment illustrated, but, on the contrary, the invention intends covering all the modifications, alternative and equivalent constructions that fall within the scope of the invention as defined in the claims.

The use of "for example", "etc.", "or" indicates non-exclusive alternatives without limitation unless otherwise indicated. The use of "comprises" and "includes" means "comprises or includes, but not limited to", unless otherwise indicated.

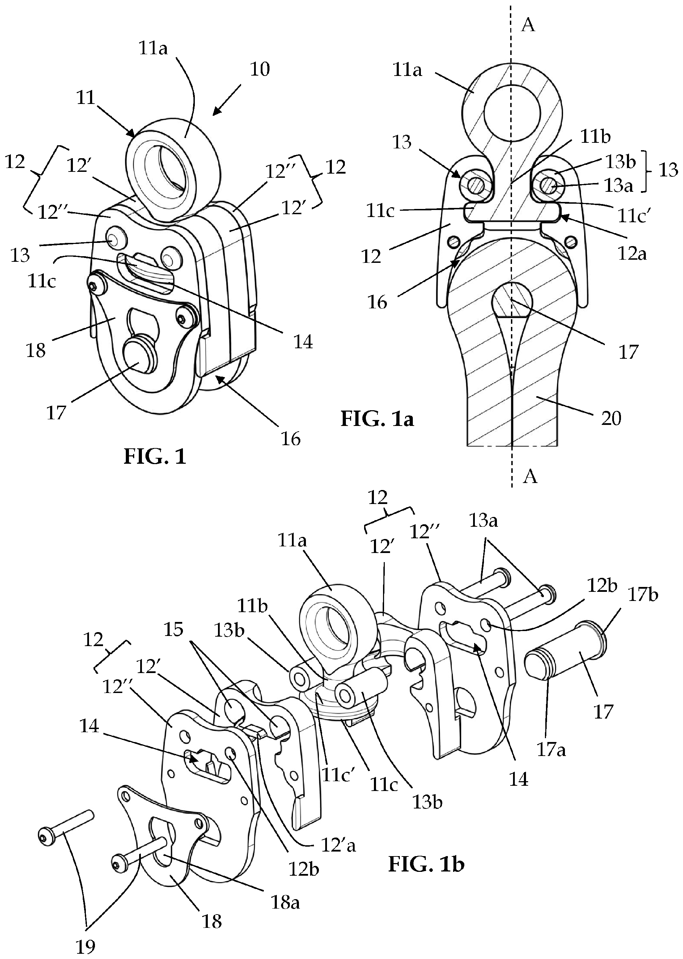

With reference to Figures 1, 1a and 1b, a first preferred embodiment of a swivel connecting device for rope access work at height according to the present invention is shown, indicated overall by number 10.

Specifically, the swivel connecting device 10 in Figures 1-1b is designed as a terminal device for connecting to a lug, i.e. a device that can be connected to a slotted end of a rope.

Such a swivel connecting device 10 comprises a connecting element 11 which in turn comprises a first eyelet-shaped portion 11a, from which a second portion 11b shaped like an elongated stem extends along a development axis A. At a free termination of the second portion 11b, the connecting element 11 comprises an enlarged third portion 11c having at least one surface 11c' developing transversely, i.e. not parallel, with respect to the development axis A. The third portion 11c is preferably integral with the second portion 11b.

In the illustrated embodiment, the third enlarged portion 11c is shaped like a disc, having a pair of surfaces 11c' developing transversely to the development axis A. Preferably, the at least one transversely developing surface 11c' has a development substantially orthogonal to the development axis A.

In an alternative embodiment (not shown), the first eyelet-shaped portion 11a defines an opening ring. For example, the first eyelet-shaped portion 11a comprises a pivot constrained to the second stem portion 11b according to an arrangement transverse to the development axis A, wherein the pivot is constrained in a removable manner to a U-shaped element, possibly in a rotatable manner around a pivot extension axis.

The connecting device 10 of Figures 1-1b further comprises a pair of half-shells 12 between which the connecting element 11 is rotatably received around the development axis A. In particular, between the pair of half-shells 12 are received the second elongated stem-shaped portion 11b and the third enlarged portion 11c, while the first eyelet-shaped portion 11a protrudes externally from the volume delimited by the pair of half-shells 12. In the embodiment illustrated, the half-shells of the pair of half-shells 12 are shaped as a wall which develops substantially parallel to the second portion 11b shaped as an elongated stem. In particular, the half-shells of the pair of half-shells 12 are shaped as a wall not orthogonal to the development axis A of the second portion 11b shaped as an elongated stem, preferably a wall having two directions of development of which one is substantially parallel to the axis A.

The half-shells of the pair of half-shells 12 are constrained to each other by a pair of elongated constraint elements 13, configured to keep the half-shells 12 spaced and parallel to each other. Between the half-shells of the pair of half-shells 12, a first compartment 12a is thus defined in which the connecting element 11 is rotatably housed around the development axis A.

In each half-shell of the pair of half-shells 12 there is a respective through opening which defines a slot-like seat 14 in which the enlarged portion 11c of the connecting element 11 engages. In this way, the enlarged portion 11c of the connecting element 11 unloads an axial force applied to the pair of half-shells 12 directly onto the connecting element 11, remaining free in rotation around the development axis A and at the same time constrained in the direction of such an axis A.

In the embodiment illustrated, the constraint elements 13 of the half-shells are pins 13a engaging corresponding holes 12b made in the half-shells 12, wherein a sleeve 13b is fitted to each pin 13a in a position interposed between the pair of half-shells 12 to act as a spacer.

In particular, in the embodiment of Figures 1-1b, a pair of pins 13a is provided which engages the half-shells 12 near the position where the second portion 11b of the connecting element 11 is located, when the enlarged portion 11c engages the seat 14. Specifically, the two pins of the pair of pins 13a are placed in such a way that the second portion 11b of the connecting element 11 is interposed between them. In other words, the holes 12b are made in the vicinity of the seat 14 and essentially at the height of its side ends. In this way, the enlarged portion 11c of the connecting element 11 can rest against the two pins 13a, unloading thereon, and thus on the pair of half-shells 12, an axial force applied on the connecting element 11. Specifically, the connecting element 11 rests advantageously against the two sleeves 13b fitted on the pins 13a, remaining free in rotation around the development axis A and at the same time constrained in the direction of such an axis A.

The pins 13a may be made as screws, rivets, studs or any other cylindrical element configured to constrain the half-shells 12 and retain the enlarged portion 11c of the connecting element 11.

In an alternative embodiment (not shown), the pins are made as one piece with the sleeve, constituting a single piece having two end sections having a diameter useful for engagement in the holes 12b of the half-shells and a portion with an enlarged diameter, useful for retaining the intermediate portion 11c of the connecting element 11, wherein the intermediate section has an extension suitable for defining the mutually spaced position of the half-shells 12.

In the embodiment illustrated, each half-shell 12 comprises a first inner portion 12', in the thickness of which a pair of housings 15 are made, configured to receive a first end of the sleeves 13b, and a second outer portion 12" in which the slot-like seat 14 and the holes 12b in which the pins 13a engage are made.

The first inner portion 12' is preferably made of plastic. More preferably, the first inner portion 12' is made of a type of plastic with a low coefficient of friction, e.g. a coefficient of friction less than 0.50, preferably less than 0.40, more preferably less than 0.35. By way of example, suitable plastic materials for making the first inner portion 12' are PA, POM, PTFE and so on. Thereby, the half-shells 12, pins 13 and connecting element 11 are reliably constrained, while leaving the connecting element 11 free to rotate in a precise, controlled and low-friction manner.

With the half-shells 12 assembled to each other in a spaced position through the pins 13a and the connecting element 11 housed in the first compartment 12a that is created between the two half-shells 12, the enlarged portion 11c of the connecting element 11 engages both the seat 14 and the pins 13a, thereby directly and indirectly unloading on the pair of half-shells 12 a component of axial force applied on the connecting element 11. At the same time, the enlarged portion 11c of the connecting element 11 is free to rotate around the development axis A.

In the preferred configuration illustrated, the first inner portion 12' has a protrusion 12'a extending inside the seat 14 made in the second outer portion 12", thereby interposing itself between the seat 14 and the enlarged portion 11c of the connecting element 11 which engages it. Preferably, the protrusion 12'a of the first inner portion 12' extending inside the seat 14 is has a height less than 1.0 mm, more preferably less than 0.5 mm.

In this way, during a preload, when for example a person puts their weight on the connecting device 10, it is free to rotate with low friction because the enlarged portion 11c of the connecting element 11 rests on the protrusion of the first inner portion 12' with a low coefficient of friction. Only with overloading will the compression of the protrusion be such that the different surfaces will be involved.

In the embodiment of Figures 1-1b, the half-shells 12 have an elongated shape in the direction of the development axis A, in a direction opposite to that along which the first eyelet-shaped portion 11a extends. Therefore, a second compartment 16 is also created between the half-shells 12 adjacent to the first compartment 12a in which the enlarged portion 11c of the connecting element 11 is received. The second compartment 16 houses a shaft 17 around which a looped end of a rope 20 can be constrained.

In the embodiment illustrated, the shaft 17 is removably mounted in the second compartment 16. In particular, at one end of the shaft 17, it has a perimeter groove 17a in which a fixing plate 18 is engaged to retain the shaft 17 in position. The fixing plate 18 is in turn connected to a first half-shell 12 of the pair of half-shells by removable constraint means 19, such as screws. The shaft 17 also preferably has a mushroom head 17b which engages a second half-shell 12 of the pair of half-shells.

The fixing plate 18 has an opening 18a for the insertion of the shaft 17 shaped in such a way as to require a sequence of at least two operations between insertion, rotation about its own axis and sliding of the shaft 17 in the opening 18a before reaching the engagement position between the opening 18a and the perimeter groove 17a. In the embodiment illustrated, the opening 18a comprises an inverted section portion of the shaft 17 from which a looped portion departs, requiring the shaft 17 to be inverted by rotating it about its own axis once it has been inserted into the inverted section portion and then translating it along the looped portion. Thereby, the shaft is prevented from accidentally slipping off the fixing plate 18.

In alternative embodiments, the shaft 17 is fixedly mounted in the second compartment 16.

The manufacture and assembly of the swivel connecting device 10 according to the invention are particularly simple and easy. The half-shells 12 are, in fact, obtainable by simple moulding and/or laser-cutting operations, while the connecting element 11 can be made by appropriate machining from solid material, for example lathe-milling. The two elements are easily assembled and constrained together with the aid of pins 13a and sleeves 13b.

Finally, in the case of a removable shaft, the shaft 17 can be easily removed to house the looped end of a rope 20 and then reliably locked back into position through the fixing plate 18 and the related removable constraint means. Thereby, the swivel connecting device 10 according to the invention is quickly mountable on the looped end of the rope 20, ensuring a secure constraint and offering a swivel connecting point to other tools.

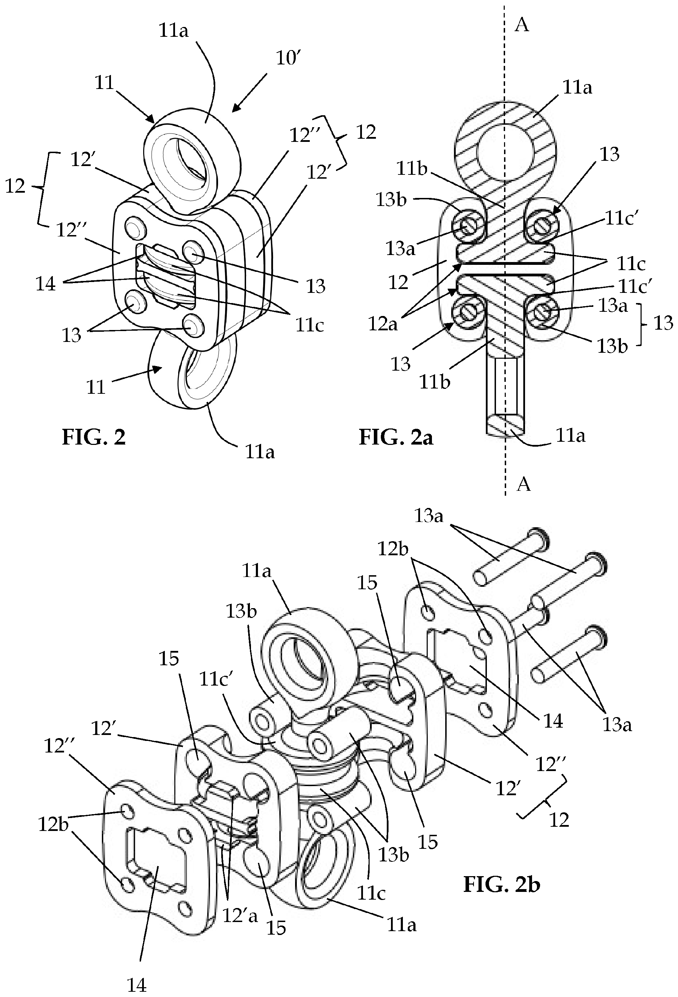

With reference to Figures 2, 2a and 2b, a second preferred embodiment of a swivel connecting device 10' according to the present invention is illustrated. Specifically, the swivel connecting device 10a of Figures 2-2b is designed as a double swivel.

The following description will focus in particular on the different features with respect to the embodiment of Figures 1-1b. For any details not described, the description relating to the first embodiment therefore applies.

The double swivel connecting device 10' illustrated in Figures 2-2b comprises two connecting elements 11, wherein each connecting element 11 comprises a first eyelet-shaped portion 11a, from which a second elongated stem-shaped portion 11b extends along a development axis A. At a free termination of the second portion 11b, the connecting element 11 comprises an enlarged third portion 11c having a pair of surfaces 11c' developing transversely, i.e. not parallel, with respect to the development axis A.

The connecting device 10' in Figures 2-2b also comprises a pair of half-shells 12 between which the connecting elements 11 are received in a swivelling manner. The half-shells of the pair of half-shells 12 are made as a wall not orthogonal to the development axis A of the second elongated stem-shaped portion 11b and are constrained to each other by means of two pairs of elongated constraint elements 13 configured to keep the half-shells 12 spaced apart and parallel to each other. Between the half-shells of the pair of half-shells 12, two first compartments 12a are defined, in each of which a respective connecting element 11 is rotatably housed. In particular, the connecting elements 11 are housed in the respective first compartments 12a so that the eyelet-shaped portions 11a protrude from the relative first compartment 12a according to mutually opposite directions.

In each half-shell of the pair of half-shells 12 there is a respective through opening which further defines a slot-like seat 14 in which the enlarged portions 11c of the connecting elements 11 engage. In this way, the enlarged portions 11c of the connecting elements 11 unload directly onto the pair of half-shells 12 an axial force applied to the connecting elements 11, remaining free in the rotation around the development axis A and at the same time constrained in the direction of such an axis A.

The two pairs of tie elements 13 comprise two pairs of pins 13a, wherein each pair of pins 13a engages the half-shells 12 near the position where the second portion 11b of a respective connecting element 11 is located, when the enlarged portions 11c engage the seat 14. Specifically, the two pins of each pair of pins 13a are placed in such a way that the second portion 11b of the connecting element 11 is interposed between them. In other words, the holes 12b in which the pins 13a engage are made on the half-shell 12 near the seat 14 and essentially at the height of its side terminations. In this way, each enlarged portion 11c of the respective connecting element 11 can rest against the two relative pins 13a, thereby unloading on the pair of half-shells 12 an axial force applied on the connecting element 11. Specifically, the connecting elements 11 rest advantageously against the sleeves 13b fitted on the pins 13a, remaining free in rotation around the development axis A and at the same time constrained in the direction of such an axis A.

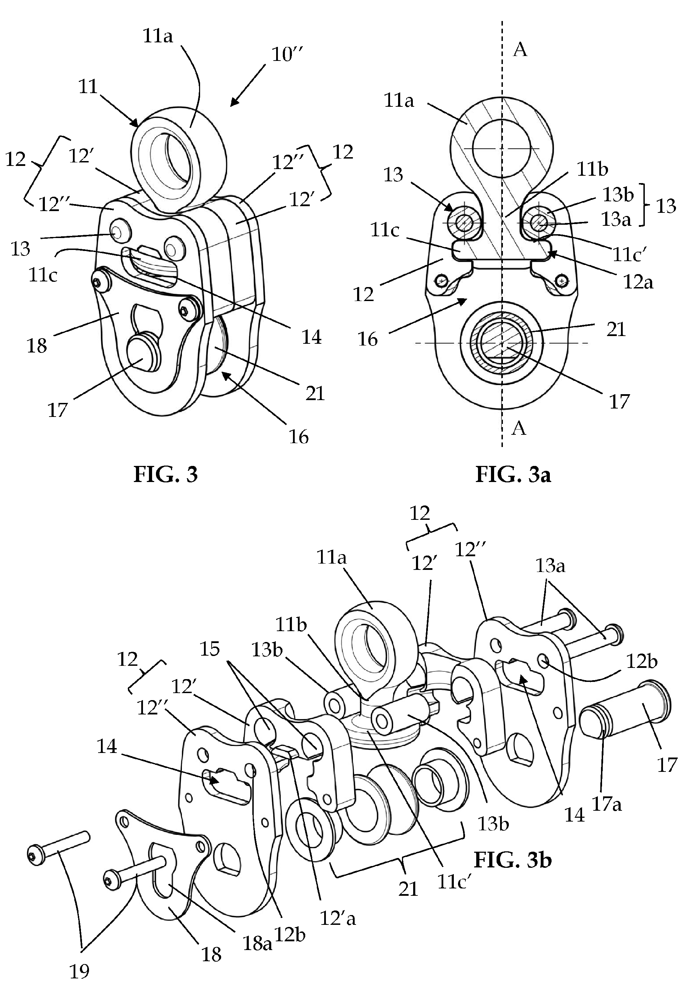

With reference to Figures 3, 3a and 3b, a third preferred embodiment of a swivel connecting device 10" according to the present invention is illustrated. Specifically, the swivel connecting device 10" in Figures 3-3b is made in the form of a pulley.

The following description will focus in particular on the different features with respect to the embodiment of Figures 1-1b. For any details not described, the description relating to the first embodiment therefore applies.

The pulley swivel connecting device 10" illustrated in Figures 3-3b essentially coincides with the swivel connecting device according to the first embodiment.

In general terms, it comprises a connecting element 11 which in turn comprises a first eyelet-shaped portion 11a, from which a second elongated stem-shaped portion 11b extends along a development axis A. At a free termination of the second portion 11b, the connecting element 11 comprises an enlarged third portion 11c having a pair of surfaces 11c' developing transversely, i.e. not parallel, with respect to the development axis A.

The connecting device 10" also comprises a pair of half-shells 12 between which the connecting element 11 is rotatably received. The half-shells of the pair of half-shells 12 are made as a wall not orthogonal to the development axis A of the second elongated stem-shaped portion 11b and are constrained to each other by means of a pair of elongated constraint elements 13 configured to keep the half-shells 12 spaced apart and parallel to each other. Between the half-shells of the pair of half-shells 12, a first compartment 12a is thus defined in which the connecting element 11 is rotatably housed. A second compartment 16 adjacent to the first one 12a is also defined between the half-shells 12, which removably houses a shaft 17' on which a swivelling wheel 21 is mounted which allows a rope to slide within the second compartment 16 defined between the two half-shells 12.

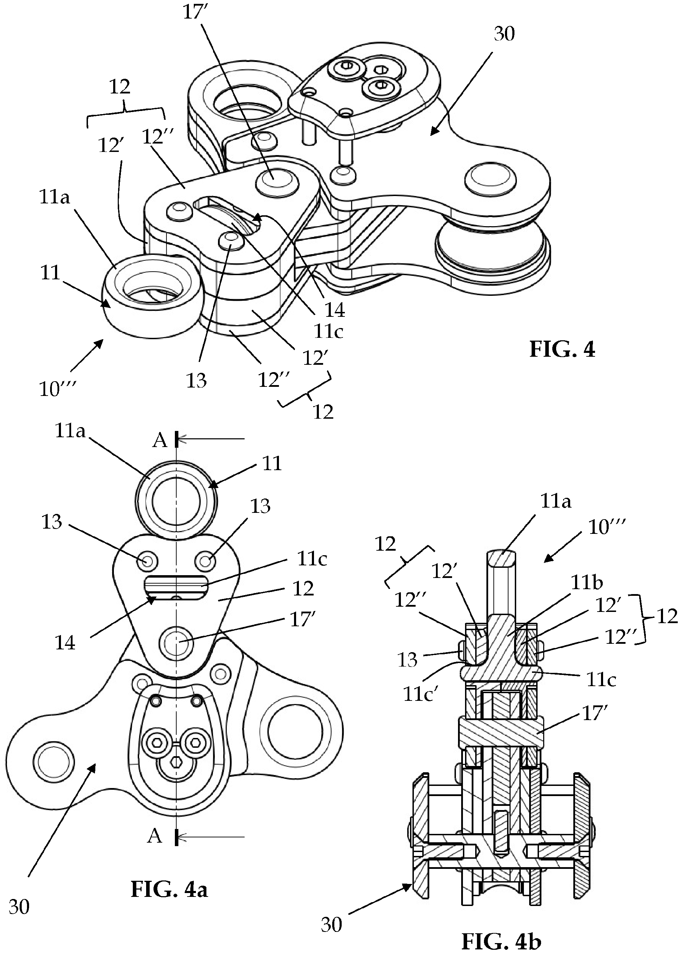

With reference to Figures 4, 4a and 4b, a fourth preferred embodiment of a swivel connecting device 10‴ according to the present invention is illustrated in combination with a coupling tool, in this case, an adjustment tool for positioning.

The following description will focus in particular on the different features with respect to the embodiment of Figures 1-1b. For any details not described, the description relating to the first embodiment therefore applies.

The swivel end device 10' in Figures 11 and 4b comprises a connecting element 4 which in turn comprises a first eyelet-shaped portion 11a, from which a second elongated stem-shaped portion 11b extends along a development axis A. At a free termination of the second portion 11b, the connecting element 11 comprises an enlarged third portion 11c having a pair of surfaces 11c' developing transversely, i.e. not parallel, with respect to the development axis A.

The connecting device 10‴ also comprises a pair of half-shells 12 between which the connecting element 11 is rotatably received. The half-shells of the pair of half-shells 12 are made as a wall not orthogonal to the development axis A of the second elongated stem-shaped portion 11b and are constrained to each other by means of a pair of elongated constraint elements 13 configured to keep the half-shells 12 spaced apart and parallel to each other. Between the half-shells of the pair of half-shells 12, a first compartment 12a is thus defined in which the connecting element 11 is rotatably housed.

Between the half-shells 12 there is also defined a second compartment 16 adjacent to the first 12a which non-removably houses a shaft 17' to which is hinged and combined a coupling tool which, in the case of Figures 4-4b, is an adjustment device for positioning 30. In alternative embodiments (not illustrated) a different coupling tool is hinged or combined with the shaft 17', such as a rope clamp, a descender, an ascender and so on.

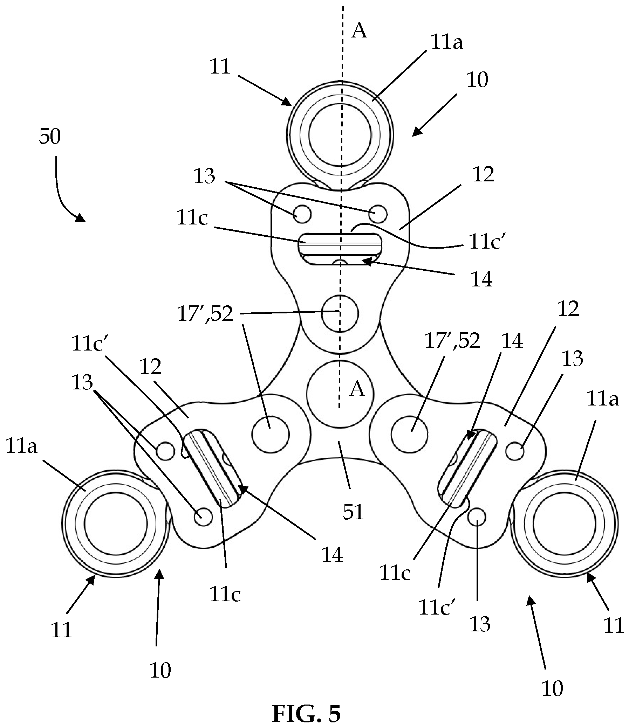

With reference to figure 5, a triple swivel 50 is illustrated using three swivel connecting devices 10‴ according to the fourth embodiment described with reference to Figures 4-4b connected to a central plate 51 at attachment points 52, which in the illustrated embodiment are preferably angularly equally distributed.

## Claims

1. Swivel connecting device (10) comprising at least one connecting element (11), which comprises a first eyelet-shaped portion (11a), and a pair of half-shells (12) between which the at least one connecting element (11) is housed with the first eyelet-shaped portion (11a) protruding externally from a volume delimited by the pair of half-shells (12) and in a rotatable manner around a development axis (A), wherein a second portion (11b) shaped like an elongated stem along the development axis (A) extends from the first eyelet-shaped portion (11a) of the at least one connecting element (11) between the half-shells (12), wherein the connecting element (11) comprises a third enlarged portion (11c) at a free termination of the second portion (11b), the third enlarged portion comprising at least one surface (11c') developing substantially transversal to the development axis (A), **characterised in that** each half-shell of the pair of half-shells (12) comprises a respective through opening, wherein each opening defines a seat (14) in which it engages the at least one transversal surface (11c') of the enlarged portion (11c) of the connecting element (11) so that it is free to rotate around the development axis (A) and so as to unload a component of force applied on the connecting element (11) along the development axis (A) onto the pair of half-shells (12).

2. Swivel connecting device (10) according to claim 1, wherein each opening defining the seat (14) is made in the form of a slot into which the enlarged portion (11c) of the connecting element (11) is inserted.

3. Swivel connecting device (10) according to claim 1 or 2, wherein the half-shells (12) of the pair of half-shells (12) are shaped as a wall and are constrained to each other by a pair of elongated constraint elements (13), wherein the constraint elements (13) are configured to keep the half-shells (12) spaced apart and substantially parallel to each other according to an arrangement which is not orthogonal to the development axis (A).

4. Swivel connecting device (10) according to claim 3, wherein the connecting element (11) is housed between the pair of half-shells (12) so that the at least one transversal surface (11c') of the enlarged portion (11c) engages the pair of constraint elements (13) in such a manner as to also unload on the pair of constraint elements (13) a component of force along the development axis (A) applied on the connecting element (11).

5. Swivel connecting device (10) according to claim 3 or 4, wherein the constraint elements (13) are pins (13a) which engage corresponding holes (12b) made on the half-shells of the pair of half-shells (12), wherein each pin (13a) comprises a portion with an enlarged diameter (13b) in an interposed position between the pair of half-shells (12) so as to act as a spacer.

6. Swivel connecting device (10) according to any one of claims 3 to 5, wherein the constraint elements (13) are a pair of pins (13a) which engage the half-shells of the pair of half-shells (12) in proximity to a position in which the second portion (11b) of the connecting element (11) is located, when the enlarged portion (11c) engages the seat (14) in such a way that the enlarged portion (11c) rests against the pair of pins (13a) and/or in such a way as to unload onto the pair of pins (13a) an axial force applied on the connecting element (11).

7. Swivel connecting device (10) according to any one of the preceding claims, wherein each half-shell of the pair of half-shells (12) comprises a first inner portion (12') and a second outer portion (12"), wherein the first inner portion (12') is made of a plastic material.

8. Swivel connecting device (10) according to claim 7, wherein the first inner portion (12') is made of a plastic material with a low friction coefficient, such as a plastic material with a friction coefficient lower than 0.50, a plastic material with a friction coefficient lower than 0.40 or a plastic material with a friction coefficient lower than 0.35.

9. Swivel connecting device (10) according to claim 7 or 8, wherein the first inner portion (12') has a protrusion (12'a) extending within the seat (14) in a manner interposed between the seat (14) and the at least one transversal surface (11c') of the enlarged portion (11c) engaging the same (14).

10. Swivel connecting device (10) according to claim 9, wherein the protrusion (12'a) of the first inner portion (12') has a thickness lower than 1.0 mm, preferably lower than 0.5 mm.

11. Swivel connecting device (10) according to any one of the preceding claims, wherein a first compartment (12a) is defined between the half-shells of the pair of half-shells (12) in which the connecting element (11) is rotatably housed.

12. Swivel connecting device (10) according to claim 11, comprising two connecting elements (11), wherein two first compartments (12a) are defined between the half-shells of the pair of half-shells (12) in each of which a respective connecting element (11) is rotatably housed in such a way that the eyelet-shaped portions (11a) protrude from the relative first compartment (12a) according to mutually opposite directions and wherein each half-shell of the pair of half-shells (12) comprises a pair of through openings, each defining a seat (14) in which it engages at least one transversal surface (11c') of the enlarged portion (11c) of a respective connecting element (11).

13. Swivel connecting device (10) according to claim 11, wherein the half-shells of the pair of half-shells (12) have an elongated shape along the development axis (A) in a direction opposite to that along which the first eyelet-shaped portion (11a) extends in such a way as to define a second compartment (16) adjacent to the first compartment (12a) along the development axis (A).

14. Swivel connecting device (10) according to claim 13, wherein the second compartment (16) houses a shaft (17, 17'), wherein preferably at one end thereof, the shaft (17) has a perimeter groove (17a) in which it engages a fixing plate (18) to retain the shaft (17) in position.

15. Swivel connecting device (10) according to claim 14, wherein a coupling tool such as an adjustment device (30) for positioning, a rope clamp, a descender, an ascender or a rigging plate (51) is hinged to the shaft (17').
